Europäisches Patentamt

European Patent Office

Office européen des brevets

(19)

(11) Numéro de publication: **0 199 614**
**B1**

(12) **FASCICULE DE BREVET EUROPEEN**

(45) Date de publication du fascicule du brevet:
**19.04.89**

(51) Int. Cl.⁴: **F16B 37/04, B42F 9/00**

(21) Numéro de dépôt: **86400563.2**

(22) Date de dépôt: **17.03.86**

(54) **Dispositif de fixation formant pince.**

(30) Priorité: **29.03.85 FR 8504844**

(43) Date de publication de la demande:
**29.10.86 Bulletin 86/44**

(45) Mention de la délivrance du brevet:
**19.04.89 Bulletin 89/16**

(84) Etats contractants désignés:
**AT BE CH DE GB IT LI LU NL SE**

(56) Documents cités:
**FR-A- 2 489 903**
**US-A- 3 881 203**
**US-A- 3 925 862**

(73) Titulaire: **RAPID S.A., 251 Boulevard Péreire,
F-75852 Paris Cédex 17(FR)**

(72) Inventeur: **Dubost, Dominique, 53 Résidence Elysée II,
F-78170 La Celle St. Cloud(FR)**

(74) Mandataire: **Durand, Yves Armand Louis et al, Cabinet Z.
Weinstein 20, Avenue de Friedland, F-75008 Paris(FR)**

## Description

La présente invention a essentiellement pour objet un dispositif de fixation formant pince qui peut être utilisé pour maintenir groupés des objets quelconques, tels que par exemple des documents, ou qui peut encore constituer un écrou permettant de fixer par exemple un panneau sur un autre panneau.

On connaît déjà depuis longtemps des attaches formant pince réalisées en métal ou en plastique et qui présentent sensiblement la forme d'un U élastiquement déformable et insérable par ses branches sur le bord d'un objet. Mais la mise en place de la pince sur l'objet est souvent difficile à effectuer, car ses branches sont initialement contraintes en position fermée, et il faut par conséquent les écarter pour permettre l'insertion sur le ou les objets. Dès lors, si les objets à saisir forment une épaisseur notable, il faut écarter fortement les branches de la pince, ce qui représente une opération pénible et qui peut même blesser la personne utilisant la pince. En outre, lors de l'insertion de la pince, ses branches frottant sur l'objet peuvent l'abîmer.

Pour remédier à ces inconvénients, on a déjà proposé, comme décrit dans le document US-A 3 881 203, d'interposer entre les deux branches de la pince un élément formant outil pour maintenir positivement ces deux branches en position écartée avant insertion de la pince sur le bord de l'objet.

Mais cet outil constitue un élément non intégré à la pince et qui doit donc être séparé de la pince après l'insertion, de sorte que ledit outil est facilement perdable et au surplus peu commode à manipuler.

On connaît par ailleurs, d'après le document FR-A 2 489 903, un écrou à pince qui peut être monté par insertion sur un support et coopérer avec une vis pour assurer la fixation d'une pièce sur ce support. Mais un tel écrou, qui ne comporte pas de moyens d'écartement des branches de la pince, doit être monté à force sur le bord du support et peut par conséquent détériorer les faces de ce support.

Le dispositif selon l'invention, qu'il s'agisse d'une simple pince pour grouper des objets ou bien d'une pince formant écrou, a pour but de remédier notamment à tous les inconvénients ci-dessus par le fait qu'il peut être inséré aisément et sans aucun effort sur l'objet ou le panneau, qu'il ne risque aucunement de détériorer cet objet ou ce panneau, et, qu'en fin de montage, il exerce néanmoins une force de pinçage satisfaisante sur l'objet ou le panneau.

A cet effet, l'invention a pour objet un dispositifs de fixation formant pince et du type présentant sensiblement la forme d'un U élastiquement déformable et insérable par ses branches sur le bord d'un objet, à l'aide d'un élément qui est interposé entre les deux branches du U pour les maintenir positivement écartées avant insertion sur le bord de l'objet, caractérisé en ce que ledit élément fait partie intégrante du dispositif et est relativement mobile par rapport auxdites branches pour pouvoir se déplacer entre elles sous l'effet de leur insertion sur le bord de l'objet, tandis qu'au moins l'une des deux branches comporte une partie défoncée, un bord d'extrémité d'une platine, ou un trou libérant les branches en fin de déplacement de l'élément au voisinage de la base du U pour ainsi permettre la fermeture des branches sur le bord de l'objet.

Suivant une autre caractéristique de ce dispositif, l'élément précité est constitué par une partie coulissant sur l'une des deux branches du U et se terminant par une extrémité repliée sur laquelle prend appui l'autre branche.

On précisera encore ici que la platine précitée est découpée dans l'une des branches du U et s'étend vers l'intérieur du U pour prendre élastiquement appui sur l'extrémité repliée de l'élément, cette platine étant solidaire de l'extrémité libre de la branche par un bord opposé au bord précité.

Suivant une autre caractéristique de l'invention, la platine précitée comporte un orifice permettant le vissage d'une vis et constitué par exemple par un fût taraudé, tandis que l'autre branche du U, de même que la partie de l'élément précité coulissant sur celle-ci comportent chacun une ouverture permettant le passage de cette vis, laquelle passe également à travers un trou ménagé dans le bord de l'objet formant par exemple un panneau, lorsque celui-ci est en position insérée entre les deux branches du U.

Selon encore une autre caractéristique du dispositif selon l'invention, on prévoit, de part et d'autre de l'ouverture ménagée dans la partie coulissante de l'élément précité, des pattes résultant de crevés dans ladite partie et coopérant avec le bord de l'ouverture ménagée dans l'autre branche précitée du U.

On précisera encore ici que l'ouverture ménagée dans la partie coulissante de l'élément précité comporte un bord faisant saillie vers l'intérieur du U.

Il faut encore dire ici que la partie coulissante précitée est légèrement cambrée et comporte des bords tombés coopérant avec les côtés de l'autre branche précitée du U.

Suivant encore une autre caractéristique de l'invention, l'extrémité repliée de l'élément précité se compose d'une première portion sensiblement perpendiculaire à la partie coulissante et parallèle à la base du U, et à laquelle fait suite une portion terminale sensiblement parallèle à la platine qui prend appui sur elle.

Selon encore une autre caractéristique du dispositif de l'invention, la portion terminale précitée présente une longueur inférieure à la distance entre le bord d'extrémité libre de la platine et la base du U.

Il faut encore noter que la première portion de l'extrémité repliée de l'élément précité peut avantageusement comporter des rainures pour procurer le raidissement nécessaire.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue schématique en élévation et coupe d'un dispositif formant pince conforme aux principes de l'invention.

Les figures 2 et 3 sont des vues en perspective des deux parties essentielles d'un dispositif formant pince à écrou et constituant l'une des applications de la présente invention.

La figure 4 est une vue en perspective de cet écrou complet et en position prête à monter sur le bord d'un panneau.

La figure 5 est une vue en élévation et de côté de cet écrou en début d'insertion sur le bord d'un panneau.

La figure 6 est une vue de côté en élévation et coupe d'un assemblage de deux panneaux à l'aide de l'écrou préalablement introduit sur l'un des panneaux.

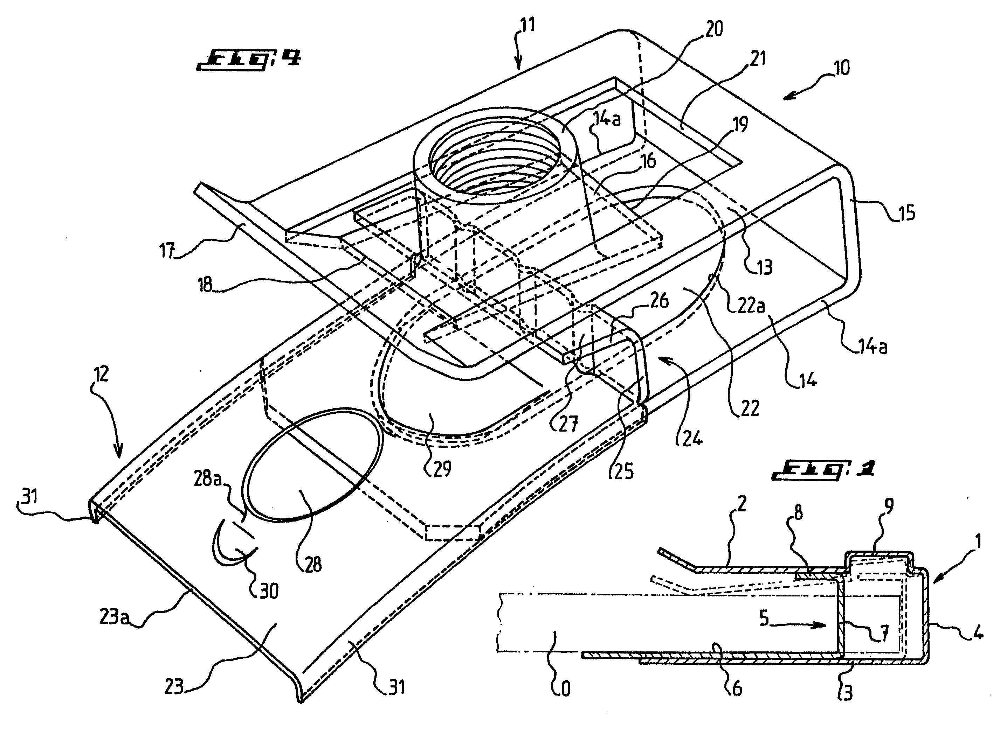

Comme on le voit sur la figure 1, un dispositif de fixation formant pince conforme aux principes de l'invention comprend essentiellement une pièce en forme de U 1 élastiquement déformable et comprenant deux branches élastiques 2 et 3 raccordées par une partie 4 formant la base du U. Entre les branches 2 et 3 est interposé un élément 5 qui maintient initialement écartées l'une de l'autre les branches 2 et 3 de façon à permettre sans difficulté l'insertion du U 1 sur le bord d'un ou plusieurs objets tels que 0.

Plus précisément, l'élément 5, qui est relativement mobile par rapport à la pièce 1 est formé d'une partie 6 pouvant coulisser sur la branche 3 du U de la pièce 1, et d'une extrémité repliée 7 sur laquelle bute ou prend appui la branche 2.

Le dispositif qui vient d'être décrit et comportant la pièce 1 et l'élément 5, fonctionne de la façon suivante.

Avant montage sur l'objet 0 les branches 2 et 3 sont maintenues écartées par l'élément 5 de sorte que l'introduction se fait facilement sur le bord de l'objet 0 qui peut par exemple être constitué par un empilement de documents. L'utilisateur tenant la pièce en U 1 l'introduit sur le bord de l'objet 0, jusqu'à ce que ce bord vienne buter contre l'extrémité repliée 7 de l'élément 5. A partir de ce moment là, la poussée exercée sur la pièce 1 provoque son glissement sur l'élément 5 immobilisé par le bord de l'objet jusqu'à ce que la portion terminale 8 de l'extrémité repliée 7 parvienne dans une partie défoncée 9 prévue dans la branche 2 au voisinage de la base 4 du U. Dès lors, la branche 2 est libérée et prend élastiquement appui contre l'objet 0, comme on le voit en traits pointillés sur la figure 1. C'est dire que la pièce ou pince 1 se trouve ainsi en position finale de montage sur l'objet 0.

On notera que la partie défoncée 9 pourrait être constituée tout simplement par un trou dans la branche 2 ou bien par tout autre moyen susceptible de libérer la branche 2 initialement maintenue positivement écartée de la branche 3 grâce à l'élément 5.

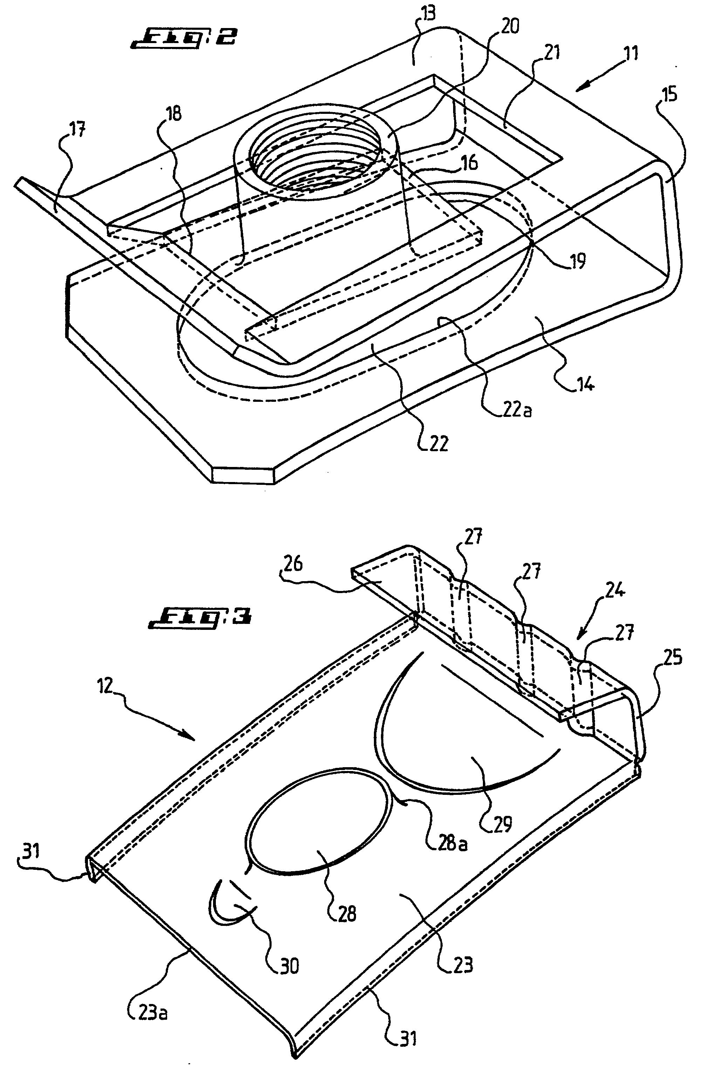

Le principe du dispositif à pince qui vient d'être décrit trouve une application particulièrement intéressante dans les écrous à montage sur le bord d'un panneau, comme on le décrira maintenant en détail, en se reportant aux figures 2 à 4.

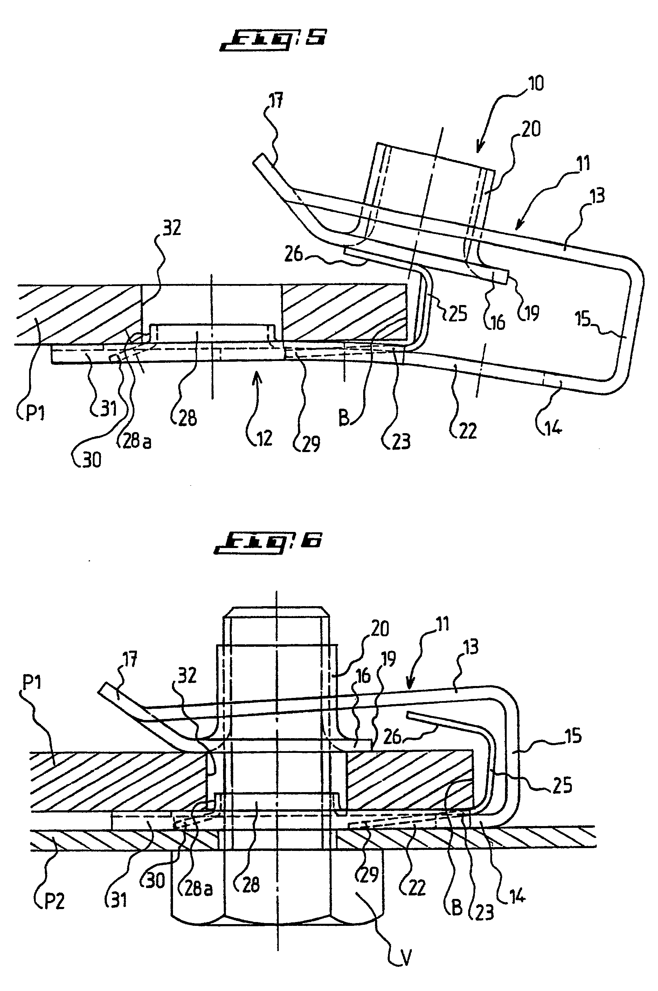

Comme on le voit sur la figure 4, l'écrou 10, de préférence réalisé à partir d'une tôle d'acier à ressort, présente la forme générale d'un U élastiquement déformable que l'on voit en 11 sur la figure 2, et à l'intérieur duquel est monté un élément 12 que l'on voit isolément sur la figure 3. Le U 11 comprend une première branche ou branche supérieure 13 et une autre branche ou branche inférieure 14 reliées par une partie 15 formant la base du U.

La branche 13 comporte une partie découpée et déformée qui s'étend entre les deux branches 13 et 14 et qui forme une platine 16. Suivant l'exemple représenté, cette platine 16 est solidaire de l'extrémité libre et recourbée vers le haut 17 de la branche 13, et elle est située légèrement en dessous du plan de la branche 13 grâce à un pliage que l'on voit en 18. Le bord d'extrémité libre 19 de la platine 16 se trouve à une certaine distance de la base 15 du U 11.

La platine 16 porte un fût taraudé 20 s'étendant vers le haut et passant au travers de la découpe 21 pratiquée dans la branche 13 pour réaliser la platine 16. Ce fût taraudé 20 permet le vissage d'une vis V bien visible sur la figure 6, et il pourrait très bien être tout simplement constitué par un orifice ou une empreinte de vissage, ou d'une manière générale, par tout moyen approprié et susceptible de coopérer avec le filetage d'une vis ou d'un élément fileté quelconque.

La branche inférieure 14 du U 11 comporte une ouverture 22 qui est représentée comme étant de forme oblongue, mais qui pourrait revêtir toute autre forme, à la condition que ladite ouverture permettant le passage de la vis V demeure en alignement avec l'orifice du fût taraudé 20 ou de l'empreinte de vissage pouvant être prévue à la place de ce fût.

L'élément 12, comme on le voit bien sur les figures 3 et 4, est interposé entre les branches 13 et 14 de la pièce en U 11 et comprend une partie 23 montée coulissante sur la branche 14 et se terminant par une extrémité repliée 24 sur laquelle bute et prend élastiquement appui la platine 16. Plus précisément, l'extrémité repliée 24 est formée d'une première portion 25 sensiblement perpendiculaire à la partie coulissante 23 et sensiblement parallèle à la base 15 du U 11, laquelle première portion se termine par une portion terminale et repliée 26 qui, comme on le voit sur la figure 4, est sensiblement parallèle à la platine 16 qui prend appui sur elle. On a montré en 27 des nervures ou analogues qui raidissent avantageusement l'extrémité repliée 24 de l'élément 12.

La partie 23 de cet élément est munie d'une ouverture 28 permettant le passage de la vis V, comme on le verra plus loin à propos du fonctionnement. Des crevés sont pratiqués dans la partie coulissante 23, de part et d'autre de l'ouverture 28 pour former des pattes 29 et 30 faisant saillie vers le dessous de la partie 23, c'est-à-dire vers la branche 14 de la pièce en U 11. Les pattes 29 et 30 sont destinées à coopérer avec le bord 22a de l'ouverture 22 dans la branche 14. On remarquera ici que les pattes 29 et 30 s'étendent toutes les deux suivant la même direction, vers le bord 23a de la partie coulissante 23.

L'ouverture 28 pratiquée dans cette partie comporte de préférence un bord 28a en saillie et formant en quelque sorte une extrusion tournée du côté de la branche 13 de la pièce en U 11, c'est-à-dire vers l'intérieur du U.

La partie 23 est de préférence légèrement cambrée entre le bord 23a et l'extrémité repliée 24, et elle comporte des bords tombés 31 coopérant avec les côtés 14a de la branche 14, comme on le voit bien sur la figure 4. Ainsi, l'élément 12 sera guidé lors de son coulissement, par sa partie 23, sur la branche 14 de la pièce en U 11.

Il est important de noter ici que la portion terminale 26 de l'extrémité repliée 24 s'étend suivant une longueur qui est inférieure à la distance entre le bord 19 de la platine 16 et la base 15 de la pièce en U 11. Cela est indispensable pour le fonctionnement de l'écrou qui sera décrit maintenant en se reportant plus particulièrement aux figures 5 et 6.

A l'état non monté, la pièce en U 11 et l'élément 12 formant l'écrou 10 se trouvent dans la position représentée sur les figures 4 et 5. On rappellera ici que les deux branches 13 et 14 sont écartées grâce à l'extrémité repliée 25 sur laquelle prend élastiquement appui la platine 16, et on notera que la patte 29 est accrochée dans le bord de la partie avant de l'ouverture oblongue 22 ménagée dans la branche 14, comme on le voit sur la figure 4. C'est dire que l'élément 12 est accroché sur la pièce en U 11 et ne peut pas s'échapper de cette pièce.

Comme cela est visible sur la figure 5, l'écrou 10 est tout d'abord présenté en face du bord B d'un panneau tel que P₁ sur lequel on veut monter l'écrou. La partie extrudée ou en saillie 28a de l'ouverture 28 dans l'élément 12 est placée et se loge dans un orifice 32 prévu dans le panneau P₁. Pour effectuer le montage de l'écrou 10, il suffit alors d'exercer une poussée sur la partie 15 de l'écrou. La partie repliée 25 de l'élément 12 viendra alors buter sur le bord B, et, la poussée sur la partie 15 étant continuée, la pièce en U 11 sera introduite sur le panneau P₁ en glissant sur l'élément 12 immobilisé par le bord B, et cela jusqu'à ce que la portion 26 de l'élément 12 échappe au bord 19 de la platine 16. A ce moment là, la branche 13 de la pièce en U 11 sera libérée et prendra élastiquement appui contre la face supérieure du panneau P₁, comme on le voit bien sur la figure 6.

Il est à noter ici que la partie 26 de l'élément 12 se loge entre le bord 19 de la platine 16 et la partie 15 de la pièce en U 11, et que le fût taraudé 20, le trou 32 dans le panneau P₁, l'ouverture 28 dans l'élément 12 et l'ouverture 22 de la branche 14 sont alignés, ce qui, comme on le comprend, permettra le passage et l'introduction de la vis V qui peut être vissée dans le fût taraudé 20 pour finalement permettre la fixation d'un panneau P₂ sur le panneau P₁.

On notera que, dans cette position montée, la patte 30 de l'élément 12 se sera substituée à la patte 29 pour venir s'accrocher dans le bord 22a de l'ouverture 22 pratiquée dans la branche 14 de la pièce en U 11. Cette substitution s'effectuera après glissement relatif de l'élément 12 dans le U formé par la pièce 11.

On remarquera ici que, dans le cas où le panneau P₁ est d'une très faible épaisseur, ce qui n'est pas le cas sur les figures 5 et 6, l'extrusion 28a formant le bord de l'ouverture 28 dans l'élément 12 pourra avantageusement s'encastrer légèrement à l'intérieur de l'orifice du fût taraudé 20 ce qui protègera avantageusement le bord du trou 32 dans le panneau P₁ contre des agressions diverses telles que celles provoquées par la corrosion ou par le filetage de la vis.

On a donc réalisé suivant l'invention un écrou à pince qui ne nécessite aucun effort de montage puisque la pince est maintenue initialement écartée, qui évite tout risque de rayures ou de formation de copeaux sur le panneau sur lequel il est monté, qui peut être utilisé pour différentes épaisseurs de panneaux avec la même efficacité en raison notamment de la cambrure de l'élément 12, et qui peut être positionné parfaitement et très précisément sur le panneau grâce à l'extrusion 28a constituant le bord de l'orifice 28 pratiqué dans l'élément 12 interposé entre les branches 13 et 14, lequel élément, grâce aux pattes 29 et 30 sera toujours positivement maintenu avant et après montage de l'écrou.

Le dispositif de l'invention peut constituer un écrou ou non. Dans le premier cas, la partie taraudée pour le vissage peut revêtir une forme quelconque. Dans le deuxième cas, c'est-à-dire si le dispositif ne constitue pas un écrou, la pièce formant pince constitue tout simplement un U en acier à ressort par exemple, l'une des branches du U pouvant ne pas comporter de platine, dans quel cas elle coopéra directement avec l'élément interposé entre les branches du U, ou bien l'une des branches du U pouvant comporter une telle platine qui dans ce cas, coopéra avec ledit élément.

Egalement, que le dispositif selon l'invention constitue un écrou ou non, il peut recevoir des applications multiples pour fixer des objets ou pièces quelconques.

**Revendications**

1. Dispositif de fixation formant pince et du type présentant sensiblement la forme d'un U élastiquement déformable et insérable par ses branches sur le bord (B) d'un objet à l'aide d'un élément qui est interposé entre les deux branches (2, 3; 13, 14) du U pour les maintenir positivement écartées avant insertion sur le bord de l'objet, caractérisé en que ledit élément (5, 12) fait partie intégrante du dispositif et est relativement mobile par rapport auxdites branches pour pouvoir se déplacer entre elles sous l'effet de leur insertion sur le bord de l'objet, tandis qu'au moins l'une (2, 13) des deux branches comporte une partie défoncée (9), un bord d'extrémité (19) d'une platine (16) ou un trou libérant les branches (2, 3; 13, 14) en fin de déplacement de l'élément (5, 12) au voisinage de la base (4, 15) du U, pour ainsi permettre la fermeture des branches sur le bord de l'objet.

2. Dispositif selon la revendication 1, caractérisé en ce que l'élément précité (5, 12) est constitué par une partie (6, 23) coulissant sur l'une (3, 14) des deux branches du U et se terminant par une extrémité repliée (7, 24) sur laquelle prend appui l'autre branche (2, 13).

3. Dispositif selon la revendication 1 ou 2, caractérisé en ce que la platine précitée (16) est découpée dans l'une (13) des branches du U et s'étend vers l'intérieur du U pour prendre élastiquement appui sur l'extrémité repliée (24) de l'élément (12), cette platine étant solidaire de l'extrémité libre (17) de la branche (13) par un bord opposé au bord précité (19).

4. Dispositif selon l'une des revendications 1 à 3, caractérisé en ce que la platine précitée (16) comporte un orifice permettant le vissage d'une vis (V) et constitué par exemple par un fût taraudé (20), tandis que l'autre branche (14) du U de même que la partie (23) de l'élément précité (12) coulissant sur celle-ci comportent chacun une ouverture (22, 28) permettant le passage de cette vis qui passe également au travers d'un trou (32) ménagé dans le bord de l'objet formant par exemple un panneau (P1), lorsque celui-ci est en position insérée entre les deux branches (13, 14) du U.

5. Dispositif selon l'une des revendications précédentes, caractérisé en ce que, de part et d'autre part de l'ouverture (28) ménagée dans la partie coulissante (23) de l'élément précité (12) sont prévues des pattes (29, 30) résultant de crevés dans ladite partie et coopérant avec les bords (22a) de l'ouverture (22) ménagée dans l'autre branche précitée (14) du U.

6. Dispositif selon l'une des revendications précédentes, caractérisé en ce que l'ouverture (28) ménagée dans la partie coulissante précitée (23) comporte un bord (28a) faisant saillie vers l'intérieur du U.

7. Dispositif selon l'une des revendications précédentes, caractérisé en ce que la partie coulissante précitée (23) est légèrement cambrée et comporte des bords tombés (31) coopérant avec les côtés (14a) de l'autre branche (14) précitée du U.

8. Dispositif selon l'une des revendications précédentes, caractérisé en ce que l'extrémité repliée (24) de l'élément (12) se compose d'une première portion (25) sensiblement perpendiculaire à la partie (23) et parallèle à la base (15) du U (11), et à laquelle fait suite une portion terminale (26) sensiblement parallèle à la platine précitée (16) qui prend appui sur elle.

9. Dispositif selon l'une des revendications précédentes, caractérisé en ce que la portion terminale (26) présente une longueur inférieure à la distance entre le bord d'extrémité libre (19) et la platine (16) et la base (15) du U.

10. Dispositif selon la revendication 8, caractérisé en ce que la première portion (25) de l'extrémité repliée (24) de la partie coulissante (23) comporte des nervures de raidissement (27).

## Patentansprüche

1. Klammerähnliches Befestigungsmittel der Gattung, die im wesentlichen die Gestalt eines U aufweist, das elastisch verformbar ist und das mit dessen Schenkeln auf den Rand (B) eines Gegenstandes angeordnet werden kann mit Hilfe eines Elements, das zwischen beiden Schenkeln (2, 3; 13, 14) des U eingefügt ist, um diese positiv voneinander entfernt festzuhalten, bevor die Klammer auf den Rand des Gegenstands angeordnet wird, dadurch gekennzeichnet, daß das besagte Element (5, 12) ein wesentlicher Bestandteil des Befestigungsmittels ist und in Bezug auf die besagten Schenkel beweglich ist, damit es sich zwischen diesen bewegen kann, wenn sie auf den Rand des Gegenstands angeordnet werden, wobei wenigstens einer (2, 13) der beiden Schenkel ein vertieftes Teil (9), einen Endrand (19) einer Platte (16) oder ein Loch aufweist, das die Schenkel (2, 3; 13, 14) am Ende der Bewegung des Elements (5, 12) in der Nähe des Fußes (4, 15) des U befreit, damit die Schenkel sich auf den Rand des Gegenstandes schließen können.

2. Befestigungsmittel nach Anspruch 1, dadurch gekennzeichnet, daß das besagte Element (5, 12) aus einem Teil (6, 23) besteht, das auf einem (3, 14) der beiden Schenkel des U gleitet und das von einem gebogenen Ende (7, 14) beendet ist, auf welches sich der andere Schenkel (2, 14) stützt.

3. Befestigungsmittel nach Anspruch 1 oder 2, dadurch gekennzeichnet, daß die besagte Platte (16) in einem (13) der Schenkel des U geschnitten ist und sich zum Inneren des U erstreckt und sich elastisch auf das gebogene Ende (24) des Elements (12) stützt, wobei diese Platte mit dem freien Ende (17) des Schenkels (13) durch einen dem besagten Rand (19) gegenüberliegenden Rand einstückig ist.

4. Befestigungsmittel nach einem der Ansprüche 1 bis 3, dadurch gekennzeichnet, daß die besagte Platte (16) ein Loch aufweist, das das Schrauben einer Schraube V ermöglicht und das z.B. aus einer Hülse (20) mit Gewinde besteht, wobei der andere Schenkel (14) des U sowie das Teil (23) des besagten Elements (12), das auf dem U gleitet, beide eine Öffnung (22, 28) aufweisen, durch die diese Schraube sich erstrecken kann, welche Schraube sich auch durch ein im Rand des z.B. eine Platte P1 bildenden Gegenstandes durchgeführtes Loch (32) erstreckt, wenn dieser Gegenstand zwischen beiden Schenkeln (13, 14) des U eingefügt ist.

5. Befestigungsmittel nach einem der vorangehenden Ansprüche, dadurch gekennzeichnet, daß man auf beiden Seiten der im gleitenden Teil (23) des besagten Elements (12) durchgeführten Öffnung (28) durch Einschneiden im besagten Teil gebildete Klammern (29, 30) vorsieht, die mit den Rändern (22a) der im anderen besagten Schenkel (14) des U durchgeführten Öffnung (22) zusammenarbeiten.

6. Befestigungsmittel nach einem der vorangehenden Ansprüche, dadurch gekennzeichnet, daß die im besagten gleitenden Teil (23) durchgeführte Öffnung (28) einen zum Inneren des U vorspringenden Rand (28a) aufweist.

7. Befestigungsmittel nach einem der vorangehenden Ansprüche, dadurch gekennzeichnet, daß das besagte gleitende Teil (23) leicht gekrümmt ist und nach unten gebogene Ränder (31) aufweist, die mit den Rändern (14a) des anderen besagten Schenkels (14) des U zusammenarbeiten.

8. Befestigungsmittel nach einem der vorangehenden Ansprüche, dadurch gekennzeichnet, daß das gebogene Ende (24) des Elements (12) aus einem ersten Teil (25) besteht, das im wesentlichen zum Teil (23) senkrecht ist und das zum Fuß (15) des U (11) parallel ist, und dem ein zur besagten Platte (16) im wesentlichen paralleles Endteil (26) folgt, auf das sich die Platte stützt.

9. Befestigungsmittel nach einem der vorangehenden Ansprüche, dadurch gekennzeichnet, daß das Endteil (26) eine Länge aufweist, die kleiner ist als der Abstand zwischen dem freien Endrand (19) der Platte (16) und dem Fuß (15) des U.

10. Befestigungsmittel nach Anspruch 8, dadurch gekennzeichnet, daß der erste Teil (25) des gebogenen Endes (24) des gleitenden Teils (23) Versteifungsrippen (27) aufweist.

**Claims**

1. A fastening clip device in the form of a resiliently deformable, substantially U-shaped element adapted to be fitted by its legs onto the edge (B) of an object by means of a member which is interposed between the two legs (2, 3; 13, 14) of the U section so as to hold them positively apart prior to their fitting onto the edge of the object, characterized in that the said member (5, 12) is an integral part of the device and is movable relatively to the said legs so as to be displaceable between them under the action of their fitting on the edge of the object, whereas at least one (2, 13) of the two legs is provided with a recessed portion (9), an end edge (19) of a plate (16) or a hole releasing the said legs (2, 3; 13, 14), at the end of the displacement of the member (5, 12) in the vicinity of the base (4, 15) of the U section to thus allow the said legs to close onto the edge of the object.

2. A device according to claim 1, characterized in that the said member (5, 12) is constituted by a portion (6, 23) which slides on one (3, 14) of the two legs of the U section and terminates in a bent end portion (7, 24) on which the other leg (2, 13) bears.

3. A device according to claim 1 or 2, characterized in that the said plate (16) is stamped out one (13) of the legs of the U section and extends inwardly of the U section and resiliently bears upon the bent end (24) of element (12), this plate being solid with the free end (17) of the leg (13) at an edge opposite to the said edge (19).

4. A device according to one of claims 1 to 3, characterized in that the said plate (16) is provided with an opening allowing the screwing of a screw (V) and constituted for example by an internally threaded barrel portion (20), whereas the other leg (14) of the U section, as also the portion (23) of the said member (12) sliding thereon, are each provided with an opening (22, 28) allowing the passage of the said screw which also passes through a hole (32) provided in the edge of the object consisting of a panel (P₁), when the latter is in inserted position between the two legs (13, 14) of the U section.

5. A device according to one of the preceding claims, characterized in that, on either side of the opening (28) made in the sliding portion (23) of the said member (12), are provided lanced tongues (29, 30) projecting from the said portion and co-operating with the edges (22a) of the opening (22) provided in the said other leg (14) of the U section.

6. A device according to one of the preceding claims, characterized in that the opening (28) made in the said sliding portion (23) is provided with a flange (28a) projecting inwardly of the U section.

7. A device according to one of the preceding claims, characterized in that the said sliding portion (23) is slightly curved and is provided with downwardly turned edges (31) co-operating with the sides (14a) of the said other leg (14) of the U section.

8. A device according to one of the preceding claims, characterized in that the bent end (24) of the member (12) is constituted by a first portion (25) substantially perpendicular to the portion (23) and parallel to the base (15) of the U section (11) and which is followed by an end portion (26) substantially parallel to the aforesaid plate (16) which bears thereon.

9. A device according to one of the preceding claims, characterized in that the end portion (26) is of a length smaller than the distance between the free end edge (19) of the plate (16) and the base (15) of the U section.

10. A device according to claim 8, characterized in that the first portion (25) of the bent end (24) of the sliding portion (23) is provided with stiffening ribs (27).

EP 0 199 614 B1

Fig. 2

Fig. 4

EP 0 199 614 B1

**Fig.2**

**Fig.3**

EP 0 199 614 B1

Fig. 5

Fig. 6